# EUROPEAN PATENT SPECIFICATION

(11) **EP 2 812 116 B1**
(45) Date of publication and mention of the grant of the patent: **19.10.2016**
(21) Application number: 13709564.2
(22) Date of filing: 30.01.2013
(51) Int. Cl.: B01L 3/00

(54) **MICROCHIP, MICROCHIP APPARATUS AND METHOD OF MANUFACTURING A MICROCHIP**
MIKROCHIP, MIKROCHIPVORRICHTUNG UND HERSTELLUNGSVERFAHREN DES MIKROCHIPS
MICROPUCE, DISPOSITIF CONTENANT LA MICROPUCE ET MÉTHODE DE FABRICATION

(30) Priority: 06.02.2012 JP 2012023207
(43) Date of publication of application: 17.12.2014
(73) Proprietor: Sony Corporation, Tokyo 108-0075 (JP)
(72) Inventor: MATSUMOTO, Masahiro, Tokyo 108-0075 (JP); OHNISHI, MICHIHIRO, Tokyo 108-0075 (JP); KATO, Yoshiaki, Tokyo 108-0075 (JP); WATANABE, Toshio, Tokyo 108-0075 (JP)
(74) Representative: D Young & Co LLP
(86) International application number: PCT/JP2013/000472
(87) International publication number: WO 2013/118461

(56) References cited:
- EP-A1- 2 011 574
- US-A1- 2006 012 784
- US-B1- 6 521 188

## Description

### [Technical Field]

The present technology relates to a microchip. More specifically, the present technology relates to a microchip for analyzing a substance contained in a solution or a reaction product of the substance by introducing the solution into a region or regions arranged in the microchip.

### [Background Art]

In recent years, by application of the microfabrication technology in the semiconductor industry, microchips have been developed in which channels or wells for performing a chemical analysis or biological analysis are provided on a substrate made of silicone or glass. The microchips can be employed to perform an analysis using small amounts of samples, and allow disposable use (throwaway use) thereof. Accordingly, the microchips are utilized especially for biological analyses in which a tiny amount of a valuable sample or a large number of analytes are dealt with.

One example of application of the microchip is an optical detection system wherein a substance is introduced into a plurality of regions arranged in the microchip and the substance or a reaction product thereof is optically detected. Such type of optical detection systems include an electrophoresis system wherein a plurality of substances are separated by electrophoresis in channels in a microchip and the thus separated substances are optically detected, and a reaction system (e.g., nucleic acid amplification system) wherein reactions between a plurality of substances are allowed to take place in wells in a microchip and the reaction products are optically detected.

The analysis conducted using a microchip has the following problems. Since the samples are supplied in tiny amounts, it is difficult to introduce a sample solution into the wells or channels. In addition, air present inside the wells or the like may cause the introduction of a sample solution to be hampered or to take much time. Besides, at the time of introducing the sample solution, bubbles may be generated inside the wells or the like, whereby the amount of the sample solution introduced into the wells or the like would be scattered, and the accuracy of analysis would be lowered. Further, in an analysis involving heating of a sample, bubbles remaining inside the wells or the like may be expanded to move the sample solution or to hinder the reaction. This would lower the accuracy and efficiency of analysis.

In order to facilitate the introduction of a sample solution into a microchip, Patent Literature (PTL) 1 discloses "a microchip wherein the inside of regions into which to introduce a solution is set at a negative pressure in relation to an atmospheric pressure." In this microchip, a sample solution is injected into the regions, whose inside is set at the negative pressure, by use of a needle so that the sample solution is sucked into the regions by the negative pressure. As a result, the introduction can be achieved easily and in a short time.

### Citation List

### Patent Literature

[PTL1] JP 2011-163984A

### Summary

### Technical Problem

When the above-mentioned microchip is stored in the air for a long time, air may permeate into the inside of the microchip to reduce the pressure difference between the inside and the outside of the microchip. In such a case, a sufficient suction force for introduction of a sample solution may be lost. Accordingly, the present technology aims at providing a microchip wherein the pressure inside the microchip can be checked before introduction of a sample solution.

### Solution to Problem

In order to solve the above-mentioned problem, a microchip as defined in claim 1 is provided. The microchip can include a region of which the inside is set at a negative pressure in relation to an atmospheric pressure, and a pressure indication section which presents an air pressure state inside the region.

The region, preferably, includes a substrate layer having a self-sealing property based on elastic deformation.

In addition, the pressure indication section may include the substrate layer.

The pressure indication section may include an elastic member which is filled with a gas and is expanded or contracted according to a variation in an external pressure.

Besides, the pressure indication section may have a material whose color is changed by a gas and/or a humidity change.

The pressure indication section may be provided at an outer surface of the microchip. Further, the microchip may include a thermal history indication section which presents a history of heat applied to the inside of the region.

According to the present technology, there is provided a microchip that is configured to contain a sample solution for analysis. The microchip including a channel that is maintained at a pressure level less than atmospheric pressure so as to allow flow of the sample solution thru the channel; and a pressure indication section configured to detect a change in the pressure level. A microchip apparatus and a method of manufacturing a microchip are also provided.

### Advantageous Effects of Invention

According to the present technology, there is provided a microchip having an indication section by which the pressure state inside the microchip can be visually inspected.

### Brief Description of Drawings

[fig.1]Fig. 1 shows schematic views for illustrating the configuration of a microchip 1a according to a first embodiment of the present technology.
[fig.2]Fig. 2 shows schematic views for illustrating a method of introducing a sample solution in the microchip 1a.
[fig.3]Fig. 3 shows views for illustrating a method of indicating a pressure state in a pressure indication section 5 of the microchip 1a.
[fig.4]Fig. 4 is a schematic sectional view for illustrating the configuration of a microchip 1b according to a second embodiment of the present technology.
[fig.5]Fig. 5 is a schematic sectional view for illustrating the configuration of a microchip 1c according to a third embodiment of the present technology.
[fig.6]Fig. 6 is a schematic sectional view for illustrating the configuration of a microchip 1d according to a fourth embodiment of the present technology.
[fig.7]Fig. 7 is a schematic sectional view for illustrating the configuration of a modification of the microchip 1d.
[fig.8]Fig. 8 shows schematic diagrams for illustrating a method of indicating a thermal history in a thermal history indication section 6 of the microchip 1d.
[fig.9]Fig. 9 shows schematic diagrams for illustrating a method of indicating a thermal history on a real-time basis in the thermal history indication section 6 of the microchip 1d.

### Description of Embodiments

Now, preferred embodiments for carrying out the present technology will be described below. Incidentally, the embodiments described below show representative embodiments of the present technology, and the scope of the present technology is not to be narrowly construed due to the embodiments. Description will be made in the following order.
1. Microchip according to First Embodiment
   (1) Configuration of microchip 1a
   (2) Method of introducing sample solution into microchip 1a
   (3) Indicating method at pressure indication section 5 of microchip 1a
2. Microchip according to Second Embodiment
   (1) Configuration of microchip 1b
   (2) Indicating method at pressure indication section 5 of microchip 1b
3. Microchip according to Third Embodiment
4. Microchip according to Fourth Embodiment
   (1) Configuration of microchip 1d
   (2) Configuration of microchip 1e
   (3) Indicating method at thermal history indication section 6

### 1. Microchip according to First Embodiment

### (1) Configuration of microchip 1a

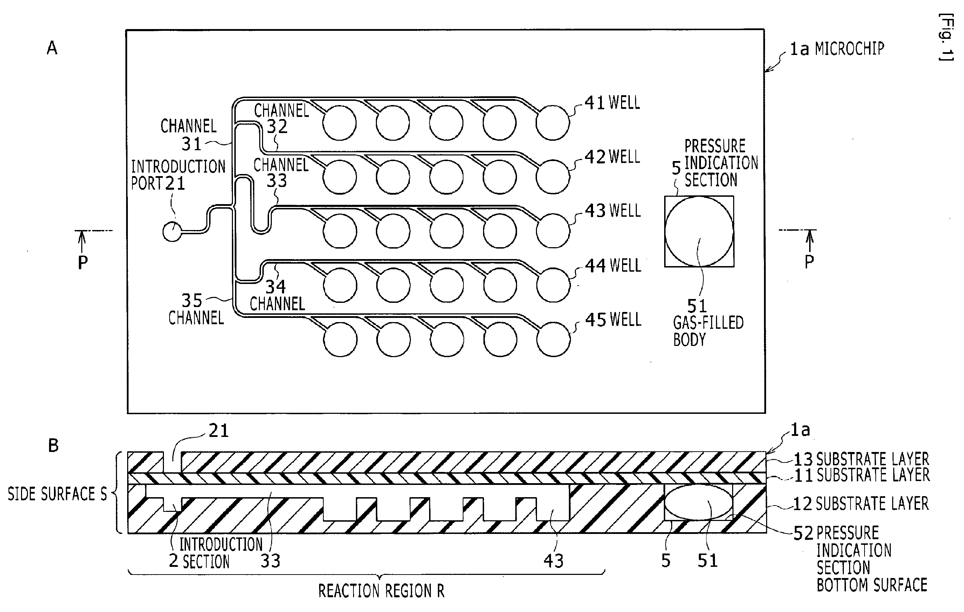

Fig. 1 shows schematic views for illustrating the configuration of a microchip 1a according to a first embodiment of the present technology. Fig. 1A is a schematic top plan view, and Fig. 1B is a schematic sectional view corresponding to P-P section of Fig. 1A.

As shown in Fig. 1A, wells 41, 42, 43, 44, and 45 serving as analysis sites for a substance contained in a sample solution or a reaction product of the substance are disposed in the microchip 1a. Each of the wells communicates with an introduction section 2 through a channel 31, 32, 33, 34, or 35. In addition, the microchip 1a is provided with a pressure indication section 5 in which a gas-filled body 51 is contained. Incidentally, in the description of the microchip 1a below, the five wells supplied with the sample solution through the channel 31 will all be referred to as wells 41. Similarly, the sets of five wells which are supplied with the sample solution respectively through channels 32, 33, 34, and 35 will be referred to respectively as wells 42, 43, 44, and 45.

The sample solution to be introduced into the microchip 1a according to this embodiment refers to a solution containing an analyte or a substance which reacts with another substance to produce an analyte. Examples of the analyte include nucleic acids such as DNA, RNA, etc., peptides, and proteins inclusive of antibodies. In addition, a biological sample that contains the analyte, such as blood, as it is or a diluted solution thereof may be used as the sample solution to be introduced into the microchip 1a. Besides, examples of the analytical technique in which the microchip 1a is employed include those analytical techniques in which a nucleic acid amplification reaction is utilized, such as the conventional PCR (polymerase chain reaction) method in which a temperature cycle is carried out or various isothermal amplification methods which does not involve any temperature cycle.

The microchip 1a is composed of three substrate layers 11, 12, and 13 (see Fig. 1B). As exemplified by the schematic sectional view in Fig. 1B, the substrate layer 12 is provided with the above-mentioned introduction section 2, channels 31, 32, 33, 34, and 35, and wells 41, 42, 43, 44, and 45. These regions in which the sample solution is made to flow will be referred to as "reaction region R."

Besides, the substrate layer 12 is provided with a pressure indication section 5. The pressure indication section 5 in the microchip according to the present technology refers to a combination of a detection member or the like which shows a variation reflecting a variation in the air pressure in the reaction region R with a vessel housing the detection member or the like or with a material containing the detection member or the like. The configuration of the pressure indication section 5 will be described in detail in (2) below. In the microchip 1a according to this embodiment, a gas-filled body 51 is used as the detection member, and a part of the substrate layer 12 is configured as the vessel which houses the gas-filled body 51. In the microchip 1a, the reaction region R and the pressure indication section 5 do not communicate with each other but are provided independently in the microchip 1a.

The substrate layer 13 is provided with an introduction port 21 for introducing the sample solution into the microchip 1a. On the other hand, a surface opposite to the introduction port 21 of the substrate layer 11 is not provided with any opening part. Therefore, the reaction region R in the microchip 1a does not communicate with the exterior.

As materials for the substrates 11, 12, and 13, there can be used glasses and various plastics. Preferably, the substrate layer 11 is formed from an elastic material, whereas the substrate layers 12 and 13 are each formed from a gas-impermeable material. With the substrate layer 11 formed from an elastic material such as polydimethylsiloxane (PDMS), the sample solution can be easily introduced into the introduction section 2 by a sample solution introducing method which will be described later. On the other hand, with the substrate layers 12 and 13 each formed from a gas-impermeable material such as polycarbonate (PC), it is possible to prevent the sample solution introduced into the wells 41, 42, 43, 44, and 45 from disappearing by permeating through the substrate layer 11 when evaporated under heating (to prevent the solution from being lost). Incidentally, in the case where the substance held in each well in the microchip 1a according to the present technology is optically analyzed, it is preferable to select as material for each of the substrate layers a material which is light-transmitting, shows little autofluorescence, shows little wavelength dispersion and, hence, induces little optical error.

Examples of the elastic material for the substrate layer include not only silicone elastomers such as polydimethylsiloxane (PDMS) but also acrylic elastomers, urethane elastomers, fluoro-elastomers, styrene elastomers, epoxy elastomers, and natural rubber.

Examples of the gas-permeable material which can be adopted for forming the substrate layers include glasses, plastics, metals, and ceramics. Examples of the plastics include PMMA (polymethyl methacrylate; acrylic resin), PC (polycarbonate), PS (polystyrene), PP (polypropylene), PE (polyethylene), PET (polyethylene terephthalate), diethylene glycol bisallyl carbonate, SAN resin (styrene-acrylonitrile copolymer), MS resin (MMA-styrene copolymer), TPX (poly(4-methylpentene-1)), polyolefin, SiMA (siloxanyl methacrylate monomer)-MMA copolymer, SiMA-fluorine-containing monomer copolymer, silicone macromer-(A)-HFBuMA (heptafluorobutyl methacrylate)-MMA ternary copolymer, and di-substituted polyacetylene polymers. Examples of the metals include aluminum, copper, stainless steel (SUS), silicon, titanium, and tungsten. Examples of the ceramics include alumina (Al₂ O₃), aluminum nitride (AlN), silicon carbide (SiC), titanium oxide (TiO₂), zirconia oxide (ZrO₂), and quartz.

Fabrication of the introduction section 2, the channels 31, 32, 33, 34, and 35 and the wells 41, 42, 43, 44, and 45 into the substrate layer 12 can be carried out by a known technique. The known technique may be, for example, wet etching or dry etching of a glass-made substrate layer, or nanoimprint, injection molding, or machining of a plastic-made substrate layer. Besides, the introduction section 2 and the like may be formed in the substrate layer 11.

Lamination of the substrate layers 11, 12, and 13 can be carried out by a known method such as heat fusing, adhesive, anodic bonding, bonding by use of an adhesive sheet, plasma activation bonding, and ultrasonic bonding. In addition, by carrying out the lamination of the substrate layers 11, 12, and 13 under a negative pressure in relation to an atmospheric pressure, it is possible to set the pressure inside the reaction region R at a negative pressure (for example, 1/100 atm) in relation to the atmospheric pressure. In the case where an elastic and gas-permeable material such as PDMS is used for the substrate layer 11, letting the laminate of the substrate layers 11 and 12 stand under a negative pressure (vacuum) ensures that air in the reaction region R is discharged by permeation through the substrate 11, so that the inside of the reaction region R can be set at a negative pressure (vacuum) in relation to the atmospheric pressure. Besides, in the microchip 1a, the inside of the pressure indication section 5 housing the gas-filled body 51 can also be set at a negative pressure in relation to the atmospheric pressure, like the reaction region R.

### (2) Method of introducing sample solution into microchip 1a

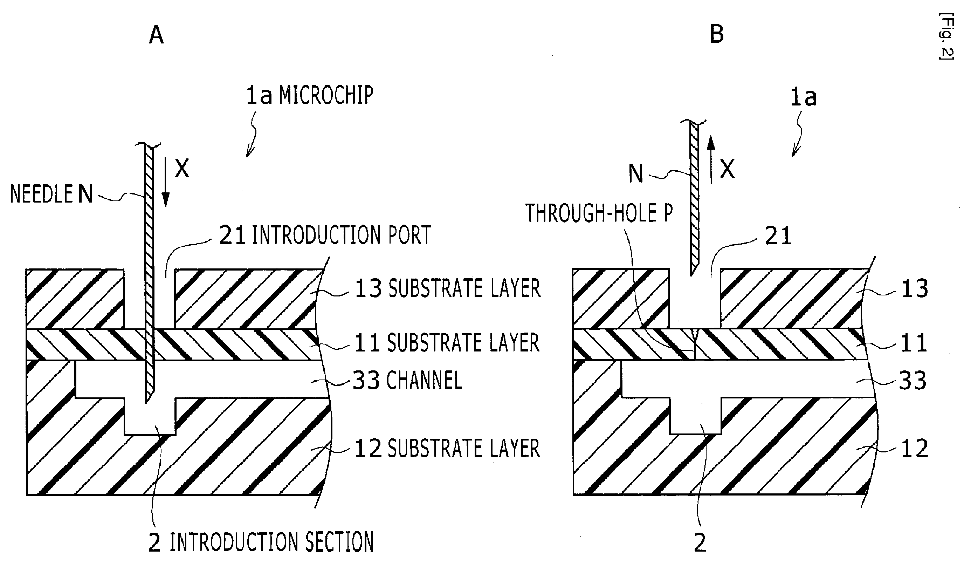

Where the substrate layer 11 formed of an elastic material is used in the microchip 1a, the sample solution can be introduced into the microchip 1a by use of, for example, a syringe which can be fitted with a needle or the like at the tip thereof. Fig. 2A and Fig. 2B are views which, by enlarging the vicinity of the introduction section 2 shown in Fig. 1B, illustrates a method of introducing a sample solution into the microchip 1a.

In introducing a sample solution, first, the tip of a needle N attached to a syringe filled with the sample solution is made to pass through the introduction port 21 and pierce through the substrate layer 11 (see Fig. 2A). When a part of the needle N reaches the introduction section 2, a pressure difference between the inside of the microchip 1a and the outside of the microchip 1a (the inside of the syringe) causes the sample solution in the syringe to pass through the lumen of the needle N and be sucked into the introduction section 2. The sample solution thus introduced into the introduction section 2 flows through the channel 33, to reach the well 43 serving as an analysis site (the well 43 is not shown). In this way, with the inside of the reaction region R set at a negative pressure in relation to the atmospheric pressure and sealed off by the substrate layer formed of a pierceable material, the sample solution can be easily introduced into the microchip 1a.

After the introduction of the sample solution, the needle N is pulled off from the microchip 1a (see arrow Y in Fig. 2B). In this instance, if the substrate layer 11 is formed from a material which has a self-sealing property based on elastic deformation, a through-hole P formed in the substrate layer 11 due to the piercing by the needle N can be spontaneously sealed off by elastic deformation of the substrate layer 11. In the present technology, the spontaneous sealing-off of the through-hole P by elastic deformation of the substrate layer 11 is defined as the "self-sealing property" of the substrate layer. With the through-hole P thus sealed off, mixing of air into the reaction region R in the microchip 1a is prevented from occurring.

### (3) Indicating method at pressure indication section 5 of microchip 1a

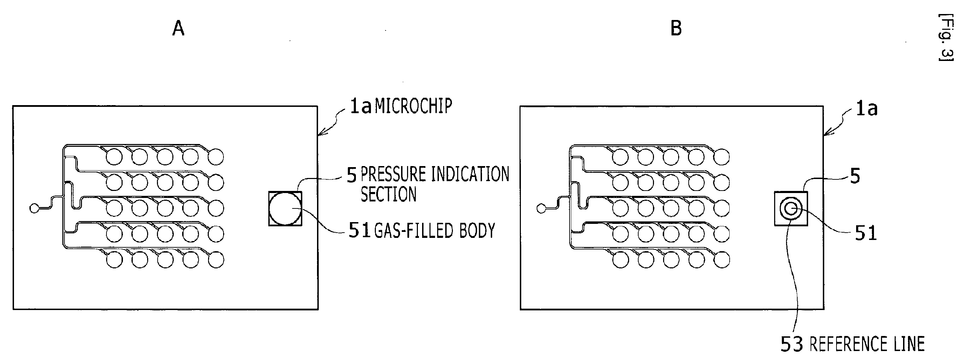

As above-described, the inside of the microchip 1a can be set at a negative pressure in relation to the atmospheric pressure by, for example, laminating the substrate layers 11, 12, and 13 under a negative pressure. However, because of the introduction of the sample solution by piercing or for the like reason, it is difficult to cover entirely the outer surfaces of the microchip 1a with the substrate layers 12 and 13 formed of gas-impermeable material; hence, the substrate layer 11 is exposed to the outside, at the introduction port 21 and a side surface S (see Fig. 1B). Therefore, storage of the produced microchip 1a under the atmospheric pressure may result in that air permeates through the substrate layer 11 into the reaction region R of the microchip 1a, and the air pressure inside the microchip 1a rises with the lapse of time, making it impossible to obtain a sufficient suction force for introducing the sample solution. In view of this, the microchip 1a is provided with a pressure indication section 5 for presenting an air pressure state, reflecting such a variation in the air pressure inside the reaction region R. Referring to Fig. 3A and Fig. 3B, the pressure indication section 5 will be described in detail below.

Fig. 3A and Fig. 3B are schematic top plan views of the microchip 1a. Fig. 3A shows the state of the pressure indication section 5 when the reaction region R in the microchip 1a is set at a negative pressure in relation to the atmospheric pressure. In the pressure indication section 5 is housed a gas-filled body 51 as a detection member which varies reflecting a variation in the air pressure inside the reaction region R. The gas-filled body 51 is an elastic member of natural rubber or a synthetic rubber or the like which is filled with a gas such as air or nitrogen. In addition, a part of the gas-filled body 51 may be fixed to a pressure indication section bottom surface 52 (see Fig. 1B). The gas-filled body 51 is filled with a gas in such a manner that the gas-filled body 51 has a sufficient volume for covering the pressure indication section bottom surface 52 in the condition where the reaction region R is at a negative pressure in relation to the atmospheric pressure.

Fig. 3B shows a state wherein air has permeated into the reaction region R of the microchip 1a and the air pressure inside the reaction region R has approached the atmospheric pressure. The permeation of air into the reaction region R takes place through the substrate layer 11. Therefore, air permeates also into the pressure indication section 5, which is partly sealed with the substrate layer 11 as shown in Fig. 1B, similarly to the permeation into the reaction region R. Upon permeation of air into the pressure indication section 5, the air pressure in the surroundings of the gas-filled body 51 rises. In the condition where the reaction region R and the pressure indication section 5 are each at a negative pressure in relation to the atmospheric pressure, therefore, the gas-filled body 51 having been covering the pressure indication section bottom surface 52 is contracted (see Fig. 3B), due to a reduction in the volume of the gas confined in the gas-filled body 51, according to the pressure difference between the inside of the gas-filled body 51 and the surroundings. This contraction of the gas-filled body 51 reflects the variation in the air pressure in the pressure indication section 5. The reaction region R and the pressure indication section 5 are both configured to include the air-permeable substrate layer 11 at least at a part thereof. Therefore, the reduction in the volume of the gas-filled body 51 reflects also the variation in the air pressure inside the reaction region R due to the air having permeated thereinto through the substrate layer 11, like into the pressure indication section 5.

In the case where the substrate layers 11, 12, and 13 constituting the microchip 1a are each formed from a light-transmitting material, the gas-filled body 51 housed in the pressure indication section 5 and the pressure indication section bottom surface 52 can be visually checked from outside of the microchip 1a. For instance, as shown in Fig. 3B, a reference line 53 is preliminarily drawn on the pressure indication section bottom surface 52. The reference line 53 cannot be visually confirmed since it is covered with the gas-filled body 51 in the condition where the reaction region R is at a negative pressure in relation to the atmospheric pressure and a sufficient pressure difference for introduction of a sample solution exists between the inside and the outside of the microchip 1a, as shown in Fig. 3A. On the other hand, when the air pressure inside the reaction region R is raised to a state unsuited to introduction of the sample solution and the gas-filled body 51 is contracted, as shown in Fig. 3B, the reference line 53 appears. In this manner, the variation in the air pressure inside the reaction region R is reflected on, and the air pressure state in the reaction region R is presented by, the pressure indication section 5 in the microchip 1a. The air pressure state indicated by the pressure indication section 5 is, in other words, the degree of maintenance of negative pressure inside the reaction region R of the microchip 1a.

The method in which the reference line 53 is provided on the pressure indication section bottom surface 52 is not restrictive, and other methods may also be adopted. For example, the gas-filled body 51 may be colored and the volume of the gas-filled body 51 may be visually confirmed, to use the checked volume as an indication or estimate of the air pressure inside the reaction region R. In addition, characters such as "UNUSABLE" may be printed on the pressure indication section bottom surface 52, to be used as a substitute for the reference line 53. A yardstick for the size and position of the reference line 53 or characters drawn on the pressure indication section bottom surface 52, or for the volume of the gas-filled body 51, may be determined by preliminarily calculating the correlation between the air pressure inside the reaction region R and the volume of the gas-filled body 51.

The position in the microchip 1a where to dispose the pressure indication section 5 is not restricted to the position shown in Fig. 1A and Fig. 1B. It suffices that the pressure indication section 5 is provided in the microchip 1a and that at least one surface thereof is composed of a substrate layer formed of an elastic material, such as the substrate layer 11. Since the substrate layer 11, serving as a route through which air permeates into the reaction region R, is provided also for the pressure indication section 5, the quantity of air permeating into the pressure indication section 5 is approximate to the quantity of air permeating into the reaction region R. Therefore, the variation in the volume of the gas-filled body 51 in the pressure indication section 5 reflects the air pressure inside the reaction region R.

Incidentally, the pressure indication section 5 provided in the microchip 1a can be used as a yardstick for judging the air pressure inside the reaction region R, also in the case where the microchip 1a in which the pressure difference between the inside and the outside thereof is reduced due to permeation of air into the reaction region R is stored under a negative pressure so that the microchip 1a is again deaerated to a state in which a sample solution can be introduced thereinto.

In the microchip 1a according to this embodiment, the pressure indication section 5 of which at least one surface is composed of an elastic substrate layer, like the reaction region R, is provided, whereby it is ensured that a variation approximate to the pressure variation generated by permeation of air into the reaction region R is generated also in the pressure indication section 5. Therefore, the pressure indication section 5 reflects the state of gas pressure inside the reaction region R, so that the air pressure state inside the region R can be visually checked through the pressure indication section 5. In the microchip 1a, the air pressure inside the reaction region R can be easily known by the pressure indication section 5, so that it is possible to judge whether the microchip 1a is fit for performing analysis thereby. Since the state of the microchip 1a can be confirmed before introduction of a sample solution, erroneous consumption of a valuable sample can be prevented from occurring.

### 2. Microchip according to Second Embodiment

### (1) Configuration of microchip 1b

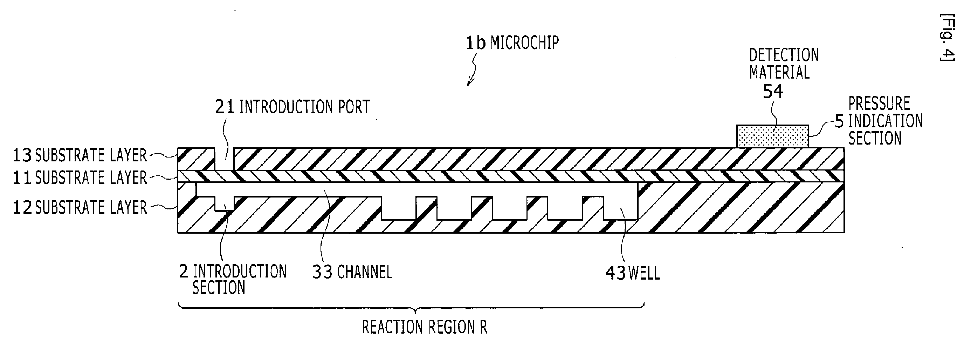

Fig. 4 is a schematic sectional view for illustrating the configuration of a microchip 1b according to a second embodiment of the present technology. The microchip 1b is the same in configuration as that in the first embodiment, except for the position where a pressure indication section 5 is disposed and a detection member housed in the pressure indication section 5. The same configurations as those in the first embodiment are denoted by the same reference signs as used above, and descriptions of them will be omitted. In addition, the materials of substrate layers 11, 12, and 13 constituting the microchip 1b are the same as those of the substrate layers of the microchip 1a which have been denoted by the same reference signs.

The pressure indication section 5 in the microchip 1b is provided on the substrate layer 13, and constitutes an outer surface of the microchip 1b. In the pressure indication section 5 is housed a detection material 54, in place of the gas-filled body 51 described in the first embodiment above. The detection material 54 is a material whose color changes through reaction with a gas, such as oxygen, or in response to humidity. As the detection material 54, there can be used, for example, leuco dyes which show a color change when oxidized and silica gel or the like which shows a color change through moisture absorption. Besides, these detection materials 54 may be kneaded into a synthetic resin or the like which is then firmly attached to an outer surface of the microchip 1b, or may be applied to a film or the like which is then adhered to an outer surface of the microchip 1b. Alternatively, the detection material 54 may be contained in a vessel made of an air-permeable and light-transmitting synthetic resin or the like, the vessel being firmly attached to an outer surface of the microchip 1b.

### (2) Indicating method at pressure indication section 5 of microchip 1b

The microchip 1b is so configured that the reaction region R is set at a negative pressure in relation to the atmospheric pressure, for example by laminating the substrate layers 11, 12, and 13 under a negative pressure in relation to the atmospheric pressure. When the microchip 1b in this state is kept in a preserving vessel formed of a metal or the like material, the airtightness of the reaction region R can be easily maintained. When the preserving vessel is placed in the atmospheric air, however, penetration of air into the preserving vessel proceeds gradually, so that air soon permeates also into the inside of the microchip 1b. In view of this, the microchip 1b is provided with the pressure indication section 5 by which air permeating into the preserving vessel or moisture is detected. An indicating method at the pressure indication section 5 wherein a variation in the air pressure inside the reaction region R of the microchip 1b is reflected, and the state of the air pressure is presented, by use of the detection material 54 will be described below. The following description will be made based on an exemplary case where an oxidation-reduction coloring matter is used as the detection material 54.

The oxidation-reduction coloring matter contains a coloring matter which shows a color change upon undergoing an oxidation reaction. When air penetrates into the preserving vessel and reaches the pressure indication section 5, therefore, the oxidation-reduction coloring matter contained in the detection material 54 shows a change in color. On the other hand, the oxidation-reduction coloring matter contains a reducing agent, as well. This ensures that in an deaerated condition, the oxidation reaction of the coloring matter stops, and due to the function of the internally present reducing agent, the coloring matter shows a color corresponding to the reduced state. The detection material 54 is housed in the pressure indication section 5, and a change in color of the detection material 54 can be visually confirmed from outside of the microchip 1b. Therefore, by checking the change in color at the pressure indication section 5 upon taking out the microchip 1b from the preserving vessel, it is possible to judge a change in the air pressure inside the microchip.

The pressure indication section 5 of the microchip 1b shows a change through reaction with air in the outside of the microchip 1b, unlike the pressure indication section 5 provided in the first embodiment. Since the microchip 1b is stored in the preserving vessel, however, the air permeating into the inside of the microchip 1b is first the air that has penetrated into the preserving vessel. The detection of air in the preserving vessel reflects the permeation of air into the reaction region R of the microchip 1b. The correlation between a variation in color at the detection material 54 and the air pressure inside the reaction region R of the microchip 1b is preliminarily calculated. By this it is ensured that the pressure indication section 5 of the microchip 1b reflects the variation in the air pressure inside the reaction region R, and can present the state of gas pressure in the reaction region R. Incidentally, characters such as "UNUSABLE" may be provided, by printing or the like, on the pressure indication section 5 by use of the oxidation-reduction coloring matter. By such a method as this, the degree of negative pressure inside the reaction region R may be presented on the pressure indication section 5 by, for example, the appearance of the characters in place of the color change.

The position in the microchip 1b at which the above-mentioned pressure indication section 5 is disposed is not restricted to the position shown in Fig. 4. Preferably, the pressure indication section 5 is provided in or on the substrate layers constituting the microchip outer surface, such as the substrate layers 12 and 13, in such a manner as to be exposed to the outside of the microchip 1b. With the pressure indication section 5 provided in such a position, it is possible by the pressure indication section 5 to detect penetration of air into the preserving vessel in which the microchip 1b is housed.

When the microchip 1b according to this embodiment is taken out of the preserving vessel after stored in the preserving vessel, it is possible by checking the pressure indication section 5 to judge whether the air pressure inside the reaction region R is a negative pressure in relation to the atmospheric pressure to such an extent as to enable introduction of a sample solution. Accordingly, the degree of maintenance of negative pressure inside the microchip 1b can be checked before introduction of a sample solution, so that erroneous consumption of valuable samples can be obviated.

### 3. Microchip according to Third Embodiment

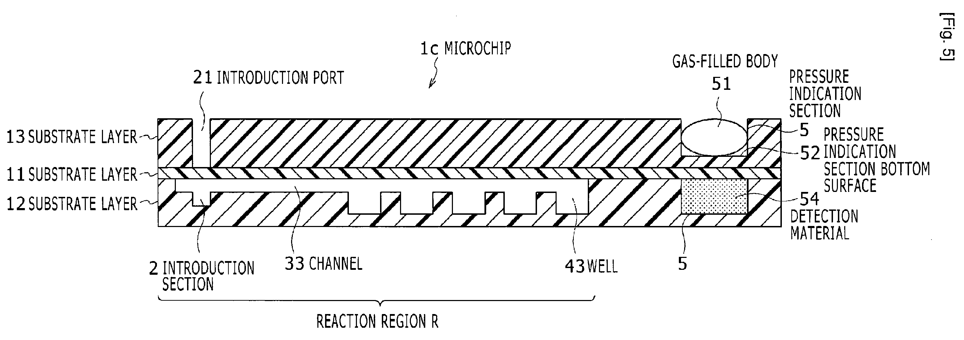

Fig. 5 is a schematic sectional view illustrating the configuration of a microchip 1c according to a third embodiment of the present technology. The microchip 1c is the same in configuration as those in the first and second embodiments, except for the position where a pressure indication section 5 is disposed. The same configurations as those in the first and second embodiments are denoted by the same reference signs as used above, and descriptions of them will be omitted. Besides, the materials of substrate layers 11, 12, and 13 constituting the microchip 1c are the same as those of the substrate layers of the microchip 1a which have been denoted by the same reference signs.

As shown in Fig. 5, the microchip 1c is provided with the pressure indication sections 5 in two locations. One of the pressure indication sections 5 is located between the substrate layer 11 which is elastic and the substrate layer 12 constituting an outer surface of the microchip 1c. Namely, this pressure indication section 5 is provided at the same position as the pressure indication section 5 described in the first embodiment above. In the pressure indication section 5 thus provided inside the microchip 1c, a detection material 54 is contained, which shows a change in color through reaction with air, like the detection material 54 in the pressure indication section 5 described in the second embodiment above.

On the other hand, the other of the pressure indication sections 5 is provided in the substrate layer 13, and constitutes an outer surface of the microchip 1c. Namely, this pressure indication section 5 is provided in the same position as the pressure indication section 5 described in the second embodiment above. In this pressure indication section 5 is housed a gas-filled body 51. The volume of the gas-filled body 51 varies with a variation in the surrounding pressure, in the same manner as in the pressure indication section 5 described in the first embodiment.

The member and the material housed in the pressure indication sections 5 at the two locations and operative to sense a pressure variation or air are not restricted to the combination shown in Fig. 5; the member and the material may both be gas-filled bodies 51 or may both be detection materials 54. Further, a configuration may be adopted wherein the detection material 54 is contained in the pressure indication section 5 provided at the outside of the microchip 1c, and the gas-filled body 51 is housed in the pressure indication section 5 provided inside the microchip 1c.

The positions where the two pressure indication sections 5 are disposed are not limited to the positions shown in Fig. 5, in the microchip 1c. Preferably, the positions are the locations where the pressure indication sections 5 are disposed in the inside of and at the outside of the microchip 1c, as described in the first and second embodiments. Besides, in the microchip 1c in this embodiment, the number of the pressure indication sections 5 disposed is not limited.

In the microchip 1c according to this embodiment, the pressure indication sections 5 are provided in the two locations, one inside and one outside. This ensures that whether the air pressure inside the reaction region R is in a sufficient range for introduction of a sample solution can be easily judged before introduction of the sample solution, both in the case where the microchip 1c is stored under an atmospheric pressure and in the case where the microchip 1c is stored in a preserving vessel.

### 4. Microchip according to Fourth Embodiment

### (1) Configuration of microchip 1d

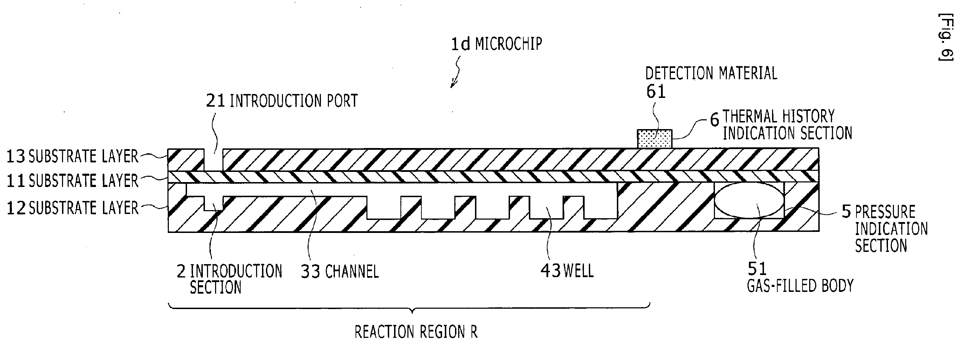

Fig. 6 is a schematic sectional view illustrating the configuration of a microchip 1d according to a fourth embodiment of the present technology. The microchip 1d is the same in configuration as that in the first embodiment, except that a thermal history indication section 6 is provided. The same configurations as those in the first embodiment are denoted by the same reference signs as used above, and descriptions of them will be omitted. Besides, the materials for substrate layers 11, 12, and 13 constituting the microchip 1d are the same as those for the substrate layers in the microchip 1a which are denoted by the same reference signs.

As shown in Fig. 6, the thermal history indication section 6 of the microchip 1d is provided on the substrate layer 13, and constitutes an outer surface of the microchip 1d. The thermal history indication section 6 has a detection material 61 by which a temperature variation such as heating or cooling is detected. Examples of the material by which temperature variations are sensed include leuco dyes capable of showing color changes through oxidation-reduction reactions, which will be described later. Other examples include pyrolysis of metallic salts, crystal transition of metal complexes, and variations in molecular orientation of liquid crystals. These show color changes in response to temperature variations and, hence, can be utilized as the detection material 61.

The detection material 61 may be housed in a vessel formed of a synthetic resin or the like and provided on an outer surface of the microchip 1d. Alternatively, the detection material may be kneaded into other material or applied to a surface of a film or the like, before being provided on a surface of the microchip 1d. Or, the detection material 61 may be provided on an outer surface of the microchip 1d by use of an ink jet system.

In the case where the microchip 1d is used for an analysis which involves a heating procedure such as PCR, the coloring matter or the like contained in the detection material 61 at the thermal history indication section 6 shows a change in color, whereby a thermal history of the microchip 1d having been placed in a heated state is indicated. Where the microchip 1d is heated, a heating system for heating the microchip 1d by holding the microchip 1d from the directions orthogonal to the substrate layers 11, 12, and 13 may be employed, for evenly heating wells 43 and the like provided inside the microchip 1d. In this case, the thermal history indication section 6 and the heating system make contact with each other. When a heater provided with a rugged pattern is disposed at that surface of the heating system which makes contact with the thermal history indication section 6, only the projected portions of the rugged pattern make contact with the thermal history indication section 6. Consequently, only the portions of the thermal history indication section 6 which are contacted by the projected portions show a change in hue. In this manner, the thermal history indication section 6 may be provided with characters such as letters, numerals, marks, etc., symbols, a one-dimensional or two-dimensional bar code symbol, patterns, or the like, by utilizing a heater of a heating system.

The number of the thermal history indication section(s) 6 provided on the microchip 1d is not limited. A plurality of thermal history indication sections 6 may be provided at different positions on the surface of the microchip 1d, whereby it is possible to check whether heating of the microchip 1d is conducted uniformly.

### (2) Configuration of microchip 1e

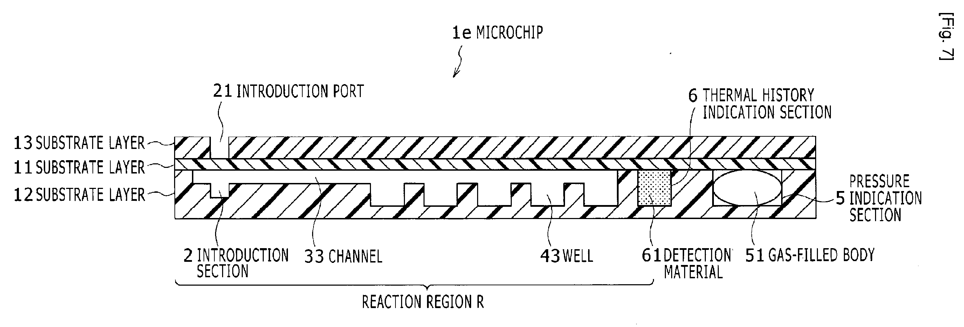

Fig. 7 is a schematic sectional view illustrating the configuration of the microchip 1e which is a modification of the microchip 1d. The microchip 1e is the same in configuration as the microchip 1d, except for the position where a thermal history indication section 6 is disposed. The same configurations as those of the microchip 1d are denoted by the same reference signs as used above, and descriptions of them will be omitted. In addition, the materials for substrate layers 11, 12, and 13 constituting the microchip 1e are the same as those for the substrate layers in the microchip 1a which are denoted by the same symbols.

In the microchip 1e shown in Fig. 7, the thermal history indication section 6 is provided in the same substrate layer 12 as that in which wells as analysis sites for a sample solution introduced into the microchips 1d are provided. The thermal history indication section 6 has a detection material 61 such as a leuco dye which shows a change in color in response to a change in temperature, such as heating or cooling. A part of the substrate layer 12 is configured as a vessel in which to contain the detection material 61. Therefore, the thermal history indication section 6 in the microchip 1e can indicates a thermal history, reflecting the temperature variations in the analysis sites such as the wells 43.

The position where the thermal history indication section 6 is disposed is not restricted to the position shown in Fig. 7. It is preferable, however, to provide the thermal history indication section 6 in the same substrate layer 12 as that in which the wells 43 and the like are provided as analysis sites for an analyte contained in a sample solution, and in proximity to the wells 43. Incidentally, the thermal history in the present technology is defined as including not only a thermal history such as the presence/absence of heating, the number of times of heating, etc. but also a temperature condition of the microchip 1e on a real-time basis.

The detection material 61 contained in the thermal history indication section 6 provided in the microchip 1e may be a plurality of coloring matters different in response temperature, and the plurality of coloring matters may be aligned in the thermal history indication section 6 or mixed with each other. Microencapsulation of the detection material 61 facilitate mixing of multiple kinds of detection materials 61. For instance, a coloring matter which shows a change in hue to red at a temperature of 5 deg C or above and a coloring matter which shows a change in hue to black at a temperature of 40 deg C or above may be mixed with each other. This ensures that when the thermal history indication section 6 is preserved at low temperature, it is colorless, so that the preserved state of the microchip 1e can be confirmed. When the thermal history indication section 6 turns red, it can be confirmed that the microchip 1e has reached room temperature. Further, when the microchip 1e is treated by a heating system and the thermal history indication section 6 turns black, it can be confirmed that the temperature of the microchip 1e has been raised. For instance, where a step of heating the microchip 1e to 60 deg C is employed for an analysis, the response temperature of the coloring matter provided as the detection material 61 may be designed and prepared in the range from room temperature to 60 deg C. This ensures that even where it is unclear whether or not the microchip 1e has been heated, it can be distinguished by visual inspection of the color of the coloring matter that the microchip 1e is a used one.

The change in color of the detection material 61 in the thermal history indication section 6 may be judged by visual inspection. Besides, another configuration may be adopted wherein the color in hue is digitized by use of a spectrophotometer or the like provided in an optical analyzing system, to be indicated as a temperature value or in the form of a word such as "USED" obtained by appropriate conversion.

### (3) Indicating method at thermal history indication section 6

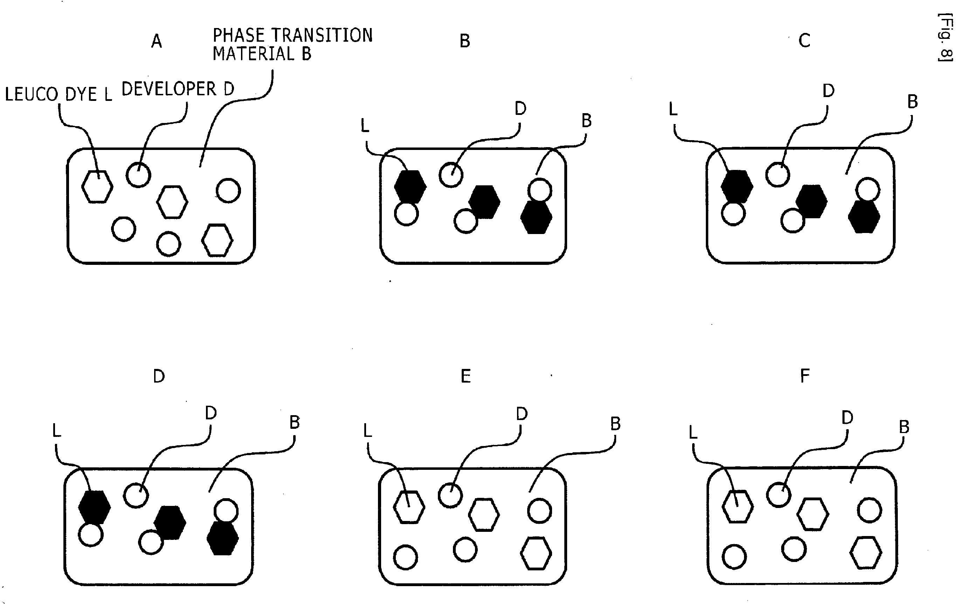

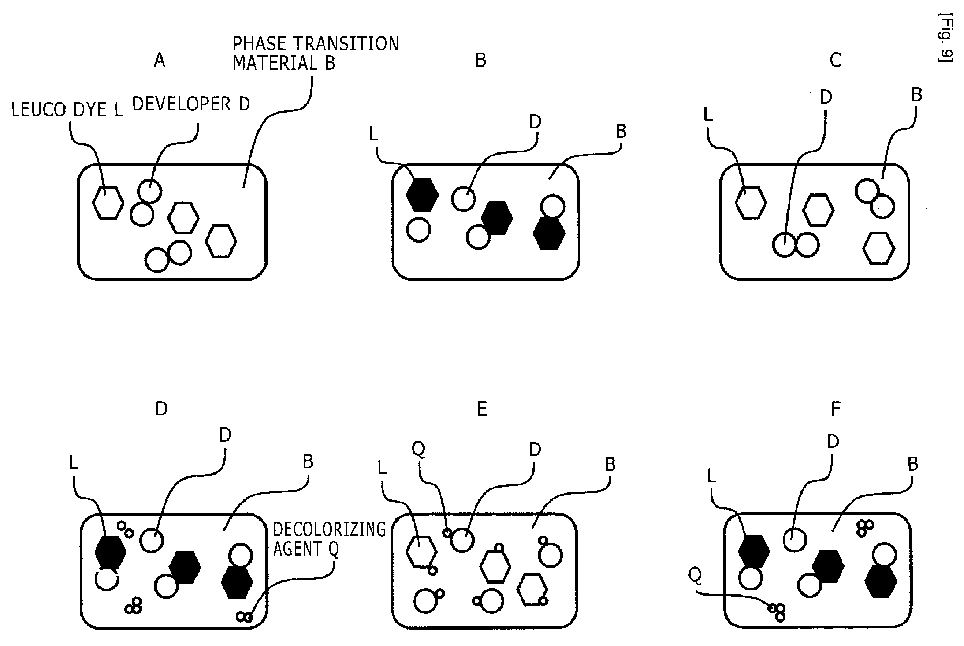

A method of presenting a thermal history by sensing an internal temperature variation, in the thermal history indication section 6 in the microchip 1d or its modification, the microchip 1e, will be described in detail below, taking a leuco dye L as an example and referring to Figs. 8 and 9. Figs. 8 and 9 schematically illustrate the detection material 61 contained in the thermal history indication section 6.

The leuco dye L shows a change in hue when oxidized. Therefore, a reagent for oxidizing the leuco dye L is used as a developer D, together with the leuco dye L. Fig. 8A shows a state of the microchip 1d, 1e before heating. The leuco dye L and the developer D are held in the state of being contained and dispersed in a phase transition material B (binder) which is in a solidified state. Fig. 8B shows a state of the microchip 1d, 1e after heating. When the phase transition material B is brought to a phase transition temperature by heating, a phase transition takes place; specifically, the phase transition material B having been solid melts. As a result, it becomes easy for the leuco dye L and the developer D contained in the phase transition material B to be coupled together. By coupling with the developer D, the leuco dye L is oxidized, to show a change in hue. Fig. 8C shows a state of the microchip 1d, 1e cooled again to normal temperature after the heating in Fig. 8B. The phase transition material B is again solidified, whereby separation of the leuco dye L and the developer D from each other is hindered, so that the hue of the leuco dye L is the same as that upon the heating.

As shown in Fig. 8A to Fig. 8C, the material containing the leuco dye L is housed in the thermal history indication section 6, whereby it can be checked, at the time of heating and after heating, whether the microchip 1d, 1e is a used one or not.

### Examples of the leuco dye L include crystal violet

([4-{bis(4-dimethylaminophenyl)methylene}-2,5-cyclohexadien-1-ylidene]dimethylam monium chloride). Crystal violet undergoes cleavage of a lactone ring by a solid acidic substance, is thereby protonated, and turns violet from a colorless state. Other examples of the leuco dye having a lactone ring include phenolphthalein and thymolphthalein. The phenolphthalein appears colorless in a neutral condition and red in a basic condition, whereas thymolphthalein appears colorless in a neutral condition and blue in a basic condition.

In addition, examples of the developer D include solid acidic substances which develop the leuco dye. Specific examples of the developer D include bisphenol A (2,2-bis(p-hydroxyphenyl)propane). Examples of the phase transition material B include dibutylphenol (2,6-di-tert-butylphenol).

It suffices for the phase transition material B or the like to be selected from those having an appropriate phase transition temperature, according to the method in which the microchip 1d, 1e is to be used. Examples of the phase transition material B include dibutylphenol (2,6-di-tert-butylphenol). The phase transition temperature of the phase transition material B can be changed by selection of the component materials. Since the phase transition material B melts at or above its phase transition temperature, the response temperature of the detection material 61 can be controlled thereby. Specifically, by selecting the kind of the phase transition material B, the leuco dye L and the developer D can be solidified in a mutually coupled state, and may also be solidified in a dispersed (mutually separated) state.

For instance, a coloring matter to be used for the detection material 61 can be prepared by a method in which crystal violet and bisphenol A in reduced states are dispersely mixed into a melt of dibutylphenol, the resulting mixture is applied to a substrate, and the mixture is solidified by cooling. Since dibutylphenol has a melting point of 35 to 38 deg C, heating to 40 deg C causes the prepared solidified matter to melt. This results in that crystal violet and bisphenol A interact, and crystal violet is oxidized, to be developed. Cooling this system causes crystal violet to be kept in the oxidized state, whereby the developed color is preserved.

Fig. 8D shows the detection material 61 in a state wherein the leuco dye L and the developer D has preliminarily been coupled together. Fig. 8E shows a state after heating of the microchip 1d, 1e. When the phase transition material B is brought to the phase transition temperature by heating, a phase transition takes place; specifically, the phase transition material B having been solid melts. Where the phase transition material B has been solidified with the leuco dye L and the developer D in the coupled state, the heating facilitates separation of the leuco dye L and the developer D from each other. Upon the separation, the action of the developer D is weakened, and the leuco dye L is brought into the reduced state. When cooled after the heating, the leuco dye L and the developer D are fixed in a state similar to the state upon heating, so that an undeveloped state of the leuco dye L is maintained (Fig. 8F).

On the other hand, by using a developer D having a melting point higher than the phase transition temperature of the phase transition material B, it is also possible to reversibly indicate changes in hue of the leuco dye L. Fig. 9A shows a state of the microchip 1d, 1e before heating. The leuco dye L and a crystallized developer D are contained in the phase transition material B being in a solidified state, and are kept in a dispersed state. Fig. 9B shows a state after heating of the microchip 1d, 1e. When temperature is raised to the melting point of the developer D, the phase transition material B having been solid melts, and the developer D having been crystallized also melts, to become able to couple with the leuco dye L. As a result, the leuco dye L is oxidized, producing a change in hue. Fig. 9C shows a state of the microchip 1d cooled again to normal temperature after the heating in Fig. 9B. In the cooling process, the developer D is first recrystallized, to loose its interaction with the leuco dye L, whereby the hue of the leuco dye L is again changed. Thereafter, the phase transition material B is solidified.

As the phase transition material B, for example, there may be used a cellulose to which a hydrophobic residual group such as a long chain alkyl group has been linked. The phase transition material B can be brought into transition between a hydrophilic state and a hydrophobic state at the phase transition temperature. At temperatures higher than the phase transition temperature, the phase transition material B melts, whereby the cellulose is loosened, to generate a hydrophilic environment for the leuco dye L and the developer D, resulting in a change in color. At low temperatures, the cellulose crystallizes, whereby a hydrophobic environment is generated in the phase transition material B under the action of the hydrophobic residual groups. In this instance, the interaction between the leuco dye L and the developer D is lost, resulting in a reversible change in color.

It is also possible to achieve reversible changes in color, by admixing the detection material 61 with a decolorizing agent Q. As shown in Fig. 9D, the leuco dye L and the developer D are kept coupled together at temperatures lower than the phase transition temperature of the phase transition material B. At temperatures higher than the phase transition temperature, the decolorizing agent Q in a dispersed state causes dispersion of the leuco dye L and the developer D, thereby producing a change in color (Fig. 9E). Thereafter, when temperature is again set below the phase transition temperature, the decolorizing agent Q is crystallized, so that the leuco dye L and the developer D are again coupled with each other, producing a reversible change in color (Fig. 9F). Known examples of the decolorizing agent Q include organic matters (R-CH=N-R',where R and R'are various organic groups) having an azomethine link.

When a material containing the leuco dye L capable of reversible changes in hue is housed in the thermal history indication section 6, as shown in Fig. 9, temperature changes inside the microchip 1d, 1e can also be visually confirmed on a real-time basis.

For inducing a change in color at the thermal history indication section 6, a pressure exerted on the microchip 1d, 1e by the heating system, for example, may also be used, other than the heating. For instance, a thermal history indication section 6 wherein microcapsules filled with a leuco dye and microcapsules filled with a developer D are arranged in an aligned manner is provided at an outer surface of the microchip 1d. In this case, application of a pressure causes breakage of the two kinds of microcapsules in the thermal history indication section 6, whereby the leuco dye L and the developer D are mixed with each other, producing a change in color.

In the microchip 1d according to this embodiment and its modification, the microchip 1e, it is possible to confirm a thermal history in addition to the above-mentioned change in the pressure inside the microchip. Since the microchip produced by processing substrate layers and the like has a fine internal structure, the sample solution introduced into the microchip is difficult to inspect visually. In the microchip 1d, 1e, the presence of the thermal history indication section 6 makes it possible to easily judge whether the microchip is a used one or not. Furthermore, where the thermal history section 6 is provided in the same substrate layer as that provided with the wells 43 and the like, it is also possible to check the temperature variations in the analysis sites on a real-time basis.

Incidentally, the microchip in which to provide the thermal history indication section 6 is not restricted to a microchip whose inside is set to a negative pressure in relation to the atmospheric pressure. The thermal history indication section 6 may be provided in a microchip such that the pressure inside the microchip and the pressure outside the microchip are equal.

The present technology may assume the following configurations.
(1) A microchip including a region of which the inside is set at a negative pressure in relation to an atmospheric pressure, and a pressure indication section which presents an air pressure state inside the region.
(2) The microchip as described in the above paragraph (1), wherein the region includes a substrate layer having a self-sealing property based on elastic deformation.
(3) The microchip as described in the above paragraph (2), wherein the pressure indication section includes the substrate layer.
(4) The microchip as described in any of the above paragraphs (1) to (3), wherein the pressure indication section includes an elastic member which is filled with a gas and is expanded or contracted according to a variation in an external pressure.
(5) The microchip as described in any of the above paragraphs (1) to (3), wherein the pressure indication section has a material whose color is changed by a gas and/or a humidity change.
(6) The microchip as described in the above paragraph (1) or (2), wherein the pressure indication section is provided at an outer surface of the microchip.
(7) The microchip as described in any of the above paragraphs (1) to (6), including a thermal history indication section which presents a history of heat applied to the inside of the region.
(8) A microchip configured to contain a sample solution for analysis, the microchip comprising:
   a channel that is maintained at a pressure level less than atmospheric pressure so as to allow flow of the sample solution thru the channel; and
   a pressure indication section configured to detect a change in the pressure level.
(9) The microchip as described in (8), further comprising a substrate layer including a self-sealing material configured to allow introduction of the sample solution into the microchip.
(10) The microchip as described in (9), wherein at least a portion of the pressure indication section contacting with the self-sealing material.
(11) The microchip as described in (10), wherein the pressure indication section is positioned on an inner surface of the microchip.
(12) The microchip as described in (9), further comprising a second substrate layer including the pressure indication section and the channel.
(13)The microchip as described in (8), wherein the pressure indication section includes a material that detects gas or humidity associated with the change in pressure level.
(14) The microchip as described in (8), wherein the pressure indication section includes an elastic material configured to respond to the change in the pressure level.
(15) The microchip as described in (14), further comprising a reference line.
(16) The microchip as described in (15), further comprising a plurality of pressure indication sections configured to detect the change in the pressure level.
(17) The microchip as described in (16) wherein a first pressure indication section includes an elastic material configured to respond to the change in the pressure level, and wherein a second pressure indication section is configured to detect gas or humidity associated with the change in pressure level.
(18) The microchip as described in (17), wherein the first pressure indication section is positioned on an inner surface of the microchip and the second pressure indication section is positioned on an outer surface of the microchip.
(19) The microchip as described in (17), wherein the first pressure indication section is positioned on an outer surface of the microchip and the second pressure indication section is positioned on an inner surface of the microchip.
(20) The microchip as described in (8), wherein the pressure indication section is positioned on at least one of an inner surface and an outer surface of the microchip.
(21) The microchip as described in (8), further comprising a thermal history indication section configured to detect a temperature change associated with the microchip.
(22) The microchip as described in (21), wherein the thermal history indication section is positioned on an inner surface of the microchip.
(23) The microchip as described in (22), wherein the pressure indication section is positioned on an inner surface of the microchip.
(24) The microchip as described in (21), wherein the thermal history indication section is positioned on an outer surface of the microchip.
(25) The microchip as described in (8), further comprising a well in communication with the channel, wherein the well is configured to serve as an analysis site.
(26) The microchip as described in (25), further comprising a plurality of channels in communication with one or more wells.
(27) A microchip apparatus comprising a microchip configured to contain a sample solution for analysis, wherein the microchip includes a channel that is maintained at a pressure level less than atmospheric pressure so as to allow flow of the sample solution thru the channel; and a pressure indication section configured to detect a change in the pressure level.
(28) A method of manufacturing a microchip configured to contain a sample solution for analysis, the method comprising providing the microchip including a channel maintained at a pressure level less than atmospheric pressure so as to allow flow of the sample solution thru the channel, and the microchip including a pressure indication section configured to detect a change in the pressure level.

### Industrial Applicability

The microchip pertaining to the present technology ensures that the pressure state inside the microchip can be easily checked before introduction of a sample solution. Therefore, the microchip pertaining to the present technology is suitably applicable, for example, to an analysis which involves a heating procedure while using a tiny amount of sample, such as a nucleic acid amplification reaction.

### Reference Signs List

B: Phase transition material; D: Developer; L: Leuco dye; N: Needle; P: Through-hole; Q: Decolorizing agent; R: Reaction region; S: Side surface; 1a, 1b, 1c, 1d, 1e: Microchip; 11, 12, 13: Substrate layer; 2: Introduction section; 21: Introduction port; 31, 32, 33, 34, 35: Channel; 41, 42, 43, 44, 45: Well; 5: Pressure indication section; 51: Gas-filled body; 52: Pressure indication section bottom surface; 53: Reference line; 54: Detection material; 6: Thermal history indication section; 61: Detection material

## Claims

1. A microchip (la, 1b, 1c, 1d, 1e) configured to contain a sample solution for analysis, the microchip comprising:
a channel (31, 32, 33, 34, 35) that is sealed so that is maintained at a pressure level less than atmospheric pressure so as to allow flow of the sample solution thru the channel; and
a pressure indication section (5) configured to detect a change in the pressure level.

2. The microchip according to claim 1, further comprising a substrate layer (11) including a self-sealing material configured to allow introduction of the sample solution into the microchip.

3. The microchip according to claim 2, wherein at least a portion of the pressure indication section contacting with the self-sealing material.

4. The microchip according to claim 3, wherein the pressure indication section is positioned on an inner surface of the microchip.

5. The microchip according to claim 2, further comprising a second substrate layer including the pressure indication section and the channel.

6. The microchip according to claim 1, wherein the pressure indication section includes a material (54) that detects gas or humidity associated with the change in pressure level.

7. The microchip according to claim 1, wherein the pressure indication section includes an elastic material configured to respond to the change in the pressure level.

8. The microchip according to claim 1, further comprising a thermal history indication section (6) configured to detect a temperature change associated with the microchip.

9. The microchip according to claim 8, wherein the thermal history indication section is positioned on an inner surface of the microchip.

10. The microchip according to claim 9, wherein the pressure indication section is positioned on an inner surface of the microchip.

11. The microchip according to claim 8, wherein the thermal history indication section is positioned on an outer surface of the microchip.

12. The microchip according to 1, further comprising a well (41, 42, 43, 44, 45) in communication with the channel, wherein the well is configured to serve as an analysis site.

13. The microchip according to claim 12, further comprising a plurality of channels (31, 32, 33, 34, 35) in communication with one or more wells (41, 42, 43, 44, 45).

14. A microchip apparatus comprising a microchip according to claim 1.

15. A method of manufacturing a microchip according to claim 1, the method comprising assembling an elastic substrate layer (11) including a self-sealing material between first and second gas impermeable substrate layers (12, 13), the elastic substrate layer and the first gas impermeable substrate layer forming the channel (31, 32, 33, 34, 35) and providing a pressure indication section configured to detect a change in the pressure level.

## Patentansprüche

1. Mikrochip (1a, 1b, 1c, 1d, 1e), gestaltet zum Enthalten einer Probenlösung zur Analyse, wobei der Mikrochip umfasst:
einen Kanal (31, 32, 33, 34, 35), der verschlossen ist, so dass er bei einem niedrigeren Druckniveau als Atmosphärendruck gehalten wird, um Fluss der Probenlösung durch den Kanal zu erlauben; und
einen Druckanzeigeabschnitt (5), der dafür gestaltet ist, eine Veränderung des Druckniveaus nachzuweisen.

2. Mikrochip gemäß Anspruch 1, ferner umfassend eine Substratschicht (11), die ein selbstdichtendes Material enthält und dafür gestaltet ist, Einführen der Probenlösung in den Mikrochip zu erlauben.

3. Mikrochip gemäß Anspruch 2, wobei wenigstens ein Teil des Druckanzeigeabschnitts in Kontakt mit dem selbstdichtenden Material steht.

4. Mikrochip gemäß Anspruch 3, wobei der Druckanzeigeabschnitt an einer inneren Oberfläche des Mikrochips angeordnet ist.

5. Mikrochip gemäß Anspruch 2, ferner umfassend eine zweite Substratschicht, die den Druckanzeigeabschnitt und den Kanal enthält.

6. Mikrochip gemäß Anspruch 1, wobei der Druckanzeigeabschnitt ein Material (54) umfasst, das Gas oder Feuchte, das/die mit der Veränderung des Druckniveaus verbunden ist, nachweist.

7. Mikrochip gemäß Anspruch 1, wobei der Druckanzeigeabschnitt ein elastisches Material umfasst, das dafür gestaltet ist, auf die Veränderung des Druckniveaus anzusprechen.

8. Mikrochip gemäß Anspruch 1, ferner umfassend einen Wärmegeschichteanzeigeabschnitt (6), der dafür gestaltet ist, eine mit dem Mikrochip verbundene Temperaturveränderung nachzuweisen.

9. Mikrochip gemäß Anspruch 8, wobei der Wärmegeschichteanzeigeabschnitt an einer inneren Oberfläche des Mikrochips angeordnet ist.

10. Mikrochip gemäß Anspruch 9, wobei der Druckanzeigeabschnitt an einer inneren Oberfläche des Mikrochips angeordnet ist.

11. Mikrochip gemäß Anspruch 8, wobei der Wärmegeschichteanzeigeabschnitt an einer äußeren Oberfläche des Mikrochips angeordnet ist.

12. Mikrochip gemäß Anspruch 1, ferner umfassend eine Vertiefung (41, 42, 43, 44, 45) in Kommunikation mit dem Kanal, wobei die Vertiefung dafür gestaltet ist, als Analyseort zu dienen.

13. Mikrochip gemäß Anspruch 12, ferner umfassend eine Vielzahl von Kanälen (31, 32, 33, 34, 35) in Kommunikation mit einer oder mehreren Vertiefungen (41, 42, 43, 44, 45).

14. Mikrochipvorrichtung, umfassend einen Mikrochip gemäß Anspruch 1.

15. Verfahren zum Herstellen eines Mikrochips gemäß Anspruch 1, wobei das Verfahren Zusammenfügen einer elastischen Substratschicht (11), die ein selbstdichtendes Material enthält, zwischen ersten und zweiten gasundurchlässigen Substratschichten (12, 13) umfasst, wobei die elastische Substratschicht und die erste gasundurchlässige Substratschicht den Kanal (31, 32, 33, 34, 35) bilden, und Bereitstellen eines Druckanzeigeabschnitts, der dafür gestaltet ist, eine Veränderung des Druckniveaus nachzuweisen.

## Revendications

1. Micropuce (la, 1b, 1c, 1d, 1e) conçue pour contenir une solution échantillon pour analyse, la micropuce comprenant :
un canal (31, 32, 33, 34, 35), qui est obturé de façon à être maintenu à un niveau de pression inférieur à la pression atmosphérique de façon à permettre l'écoulement de la solution échantillon à travers le canal ; et
une section indicatrice de pression (5), conçue pour détecter un changement du niveau de pression.

2. Micropuce selon la revendication 1, comprenant en outre une couche substrat (11) comprenant un matériau auto-obturant conçu pour permettre l'introduction de la solution échantillon dans la micropuce.

3. Micropuce selon la revendication 2, dans laquelle au moins une portion de la section indicatrice de pression est en contact avec le matériau auto-obturant.

4. Micropuce selon la revendication 3, dans laquelle la section indicatrice de pression est positionnée sur une surface intérieure de la micropuce.

5. Micropuce selon la revendication 2, comprenant en outre une deuxième couche substrat comprenant la section indicatrice de pression et le canal.

6. Micropuce selon la revendication 1, dans laquelle la section indicatrice de pression comprend un matériau (54) qui détecte un gaz ou l'humidité associé au changement de niveau de pression.

7. Micropuce selon la revendication 1, dans laquelle la section indicatrice de pression comprend un matériau élastique conçu pour répondre au changement de niveau de pression.

8. Micropuce selon la revendication 1, comprenant en outre une section indicatrice d'historique thermique (6), conçue pour détecter un changement de température associé à la micropuce.

9. Micropuce selon la revendication 8, dans laquelle la section indicatrice d'historique thermique est positionnée sur une surface intérieure de la micropuce.

10. Micropuce selon la revendication 9, dans laquelle la section indicatrice de pression est positionnée sur une surface intérieure de la micropuce.

11. Micropuce selon la revendication 8, dans laquelle la section indicatrice d'historique thermique est positionnée sur une surface extérieure de la micropuce.

12. Micropuce selon la revendication 1, comprenant en outre un puits (41, 42, 43, 44, 45) en communication avec le canal, le puits étant conçu pour servir de site d'analyse.

13. Micropuce selon la revendication 12, comprenant en outre une pluralité de canaux (31, 32, 33, 34, 35) en communication avec un ou plusieurs puits (41, 42, 43, 44, 45).

14. Appareil à micropuces, comprenant une micropuce selon la revendication 1.

15. Procédé de fabrication d'une micropuce selon la revendication 1, le procédé comprenant l'assemblage d'une couche substrat élastique (11) comprenant un matériau auto-obturant entre une première et une deuxième couches substrats (12, 13) imperméables aux gaz, la couche substrat élastique et la première couche substrat imperméable aux gaz formant le canal (31, 32, 33, 34, 35) et fournissant une section indicatrice de pression conçue pour détecter un changement du niveau de pression.
